# FASCICULE DE BREVET EUROPEEN

(11) **EP 3 010 729 B1**
(45) Date de publication et mention de la délivrance du brevet: **09.10.2019**
(21) Numéro de dépôt: 14732168.1
(22) Date de dépôt: 19.06.2014
(51) Int. Cl.: B60C 11/00, B60C 13/00, B60C 13/02

(54) **PNEUMATIQUE COMPORTANT UN MARQUAGE A FORT CONTRASTE**
REIFEN MIT KONTRASTREICHER MARKIERUNG
TYRE COMPRISING HIGH-CONTRAST MARKING

(30) Priorité: 21.06.2013 FR 1355937
(43) Date de publication de la demande: 27.04.2016
(73) Titulaire: Compagnie Générale des Etablissements Michelin, 63000 Clermont-Ferrand (FR)
(72) Inventeur: EMORINE, Hélène, F-63040 Clermont-Ferrand Cedex 9 (FR); MUHLHOFF, Olivier, F-63040 Clermont-Ferrand Cedex 9 (FR); VANDAELE, Mathieu, F-63040 Clermont-Ferrand Cedex 9 (FR)
(74) Mandataire: Demaure, Pierre-Yves
(86) Numéro de dépôt international: PCT/EP2014/062959
(87) Numéro de publication internationale: WO 2014/202731

(56) Documents cités:
- EP-A1- 1 468 846
- EP-A2- 2 204 296
- WO-A1-97/17217
- WO-A1-2014/202729
- FR-A1- 2 950 552
- US-A- 5 303 758
- US-A- 5 807 446

## Description

### DOMAINE DE L'INVENTION

La présente invention concerne un pneumatique pour véhicule automobile comportant un marquage et une texture particulière entourant ce marquage.

### ETAT DE LA TECHNIQUE

Les flancs des pneumatiques présentent une grande quantité de marquages destinés à donner des informations techniques et légales ou à permettre aux consommateurs de distinguer l'origine du produit.

Il est constant d'essayer d'améliorer la visibilité et la lisibilité de ces marquages sur les flancs des pneumatiques.

Le document EP2204296 divulgue le préambule de la revendication 1 et décrit une texture présente sur la surface externe d'un flanc de pneumatique. Cette texture comporte une pluralité de brins régulièrement répartis dans cette texture.

Le document US 2008/0283169 décrit un pneumatique en matériau caoutchoutique comprenant un flanc et un marquage formé sur ce flanc. Le marquage est disposé dans un logement réalisé en creux dans le flanc. Ce marquage est en protubérance par rapport au fond du logement de sorte qu'il bénéficie d'une bonne visibilité sur le flanc du pneumatique.

Le document WO2014202729-A1 a été publié après la date du dépôt de la présente demande et appartient l'état de la technique selon l'article 54(3) CBE. Le marquage montré dans ce document ne fait pas protubérance à partir du flanc, au contraire le marquage est disposé dans un logement en creux dans le flanc. De plus, il n'y a pas d'indication de la largeur à partir du marquage de l'extension de la texture.

Cependant, au cours d'un roulage, une grande quantité de boue ou de poussière peut se loger dans le logement diminuant en conséquence le contraste entre le marquage et le fond du logement. En outre, la fabrication d'un tel marquage logé dans un logement, nécessite une opération supplémentaire d'usinage du moule, opération qui peut être longue et couteuse.

Il existe donc un besoin de proposer une solution permettant de conserver un marquage à fort contraste sur le flanc d'un pneumatique, qui soit simple et économique à mettre en oeuvre.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « flanc » d'un pneumatique, on entend une surface latérale du pneumatique disposée entre la bande de roulement du pneumatique et un bourrelet de ce pneumatique.

Par « marquage » sur un flanc d'un pneumatique, on entend des indications sur ce flanc destinées à donner des informations techniques et légales ou à permettre aux consommateurs de distinguer l'origine du produit.

Par « texture », on entend un agencement organisé d'une pluralité d'éléments, tout ou partie des éléments de l'agencement étant la répétition d'un même élément de base, par exemple, un brin ou une lamelle.

Par « brin », on entend un élément filiforme dont la hauteur est au moins égale à 2 fois le diamètre d'un disque de même surface qu'une section moyenne de ce brin.

Par « section moyenne » d'un brin, on entend la moyenne des sections mesurées à intervalles réguliers depuis la base du brin jusqu'au sommet de ce brin.

Par « lamelle », on entend des brins allongés qui présentent une longueur au moins égale à deux fois leur hauteur.

Par « largeur moyenne » d'une lamelle, on entend la moyenne des largeurs mesurées à intervalles réguliers depuis la base de la lamelle jusqu'au sommet de cette lamelle.

### RESUME DE L'INVENTION

Le pneumatique en matériau caoutchoutique comprend un flanc et un marquage faisant protubérance à partir de ce flanc. Le pneumatique comporte une texture. La texture comporte une pluralité de brins faisant protubérance à partir du flanc, ces brins étant répartis selon une densité au moins égale à cinq brins par millimètre carré (mm²), chaque brin ayant une section moyenne comprise entre 0,0007 mm² et 0,06 mm² et/ou ladite texture comportant une pluralité de lamelles sensiblement parallèles entre elles faisant protubérance à partir du flanc, le pas des lamelles étant au plus égal à 0,5 mm, chaque lamelle ayant une largeur moyenne comprise entre 0,03 mm et 0,3 mm. La texture fait protubérance à partir du flanc du pneumatique, cette texture entourant tout ou partie du marquage. La texture s'étend à partir du marquage sur une largeur L comprise entre 0.5mm et 50mm.

La texture entourant le marquage, et formé par des brins ou des lamelles, apporte plusieurs avantages. D'une part, cette texture permet de « piéger » tout ou partie des rayons lumineux incidents qui rencontrent le flanc. Ceci permet de donner un aspect plus noir autour du marquage et en conséquence d'améliorer son contraste et donc sa visibilité par rapport au reste du flanc. D'autre part, cette texture particulière permet d'obtenir un toucher agréable sur le flanc, de type « velours ». De plus, la texture utilisée présente des propriétés hydrophobes de sorte que l'évacuation de l'eau, de la poussière ou de la boue autour du marquage est facilitée. En outre, la texture entourant le marquage présente globalement une plus grande pérennité. En effet le marquage protège la texture contre certains types d'usure, par exemple l'usure provoquée par des râpages trottoirs.

Dans une variante de réalisation, les brins de la texture, respectivement les lamelles de la texture, s'étendent en hauteur au même niveau que le marquage du flanc.

De cette manière, ces brins, respectivement ces lamelles, prolongent le flanc du pneumatique au même niveau que le marquage. L'impression visuelle d'ensemble du flanc du pneumatique est ainsi améliorée.

Dans une autre variante de réalisation, les brins de la texture, respectivement les lamelles de la texture, s'étendent en hauteur à un niveau inférieur à celui du marquage.

Le marquage permet ainsi de protéger la texture. On améliore ainsi la pérennité de cette texture.

Dans une autre variante de réalisation, les brins de la texture, respectivement les lamelles de la texture, dépassent le marquage.

Les parties émergeantes des brins, respectivement des lamelles de la texture présentent une certaine souplesse du fait de leur grand élancement. Lorsque la texture subit des efforts de frottement, ces brins, respectivement ces lamelles se déforment en absorbant une partie de ces efforts de frottement. De cette manière, on protège le marquage de l'usure et on lui assure une plus grande pérennité. En outre, le fait que les brins, respectivement les lamelles de la texture, dépassent le flanc du pneumatique, améliore globalement l'effet tactile de la texture.

Dans un mode de réalisation préférentiel, une partie des brins de la texture, respectivement une partie des lamelles de la texture dépassent le marquage et une autre partie de ces brins, respectivement de ces lamelles sont à un niveau inférieur par rapport à ce marquage.

De cette manière, on assure un bon équilibre entre la protection de la texture et la protection du marquage.

Dans un autre mode de réalisation, le marquage comprend un bord surélevé par rapport au reste de ce marquage.

On améliore de cette manière encore plus, le contraste entre le marquage et la texture, et donc la visibilité de ce marquage sur le flanc du pneumatique.

Dans un autre mode de réalisation, la texture s'étend à partir du marquage sur une largeur L comprise entre 0,5 mm et 50 mm.

De cette manière, on crée autour du marquage une zone texturée ayant des dimensions suffisantes pour créer du contraste avec le marquage. Cette zone texturée présente également des dimensions limitées de sorte que le cout de sa fabrication est également limité.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue en perspective d'un flanc d'un pneumatique et un marquage présent sur ce flanc ;
- la **figure 2** représente une vue en coupe selon l'axe X-X de la **figure 1****,** d'une texture entourant le marquage présent sur le flanc, selon un premier mode de réalisation de l'invention ;
- la **figure 3** représente une vue en coupe selon l'axe X-X de la **figure 1****,** d'une texture entourant le marquage présent sur le flanc, selon un second mode de réalisation de l'invention ;
- la **figure 4** représente une vue en coupe selon l'axe X-X de la **figure 1****,** d'une texture entourant le marquage présent sur le flanc, selon un troisième mode de réalisation de l'invention ;
- la **figure 5** représente l'état de la texture de la **figure 4** lorsque le flanc subit des efforts de frottement ;
- la **figure 6** représente une vue en coupe selon l'axe X-X de la **figure 1****,** d'une texture entourant le marquage présent sur le flanc, selon un quatrième mode de réalisation de l'invention ;
- la **figure 7** représente le marquage de la **figure 1****,** selon un mode de réalisation particulier ;
- la **figure 8** représente une vue schématique d'une texture entourant le marquage de la **figure 1** et comportant des brins ;
- la **figure 9** représente une vue schématique d'une texture entourant le marquage de la **figure 1** et comportant des lamelles.

Dans la description qui va suivre, des éléments sensiblement identiques ou similaires seront désignés par des références identiques.

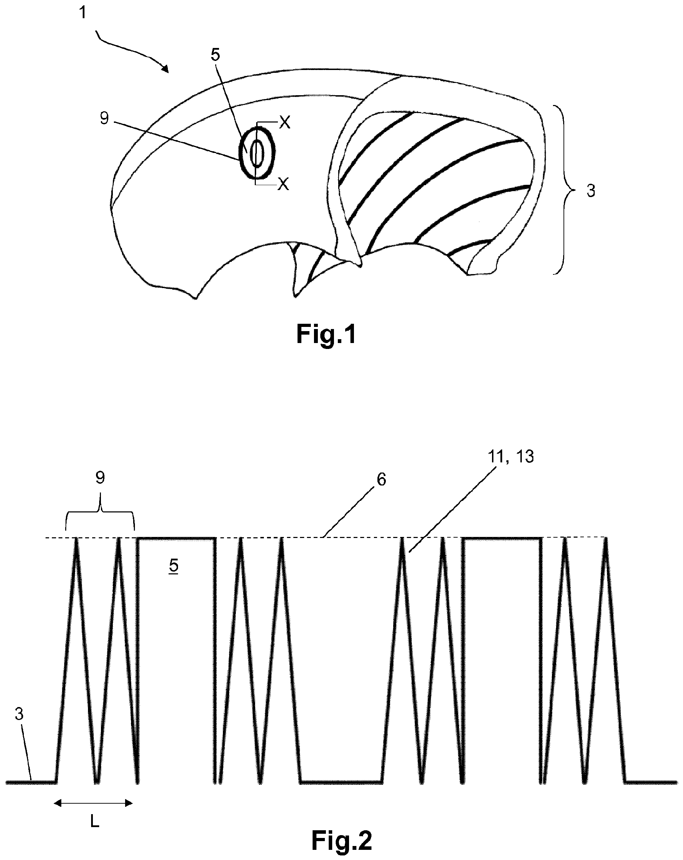

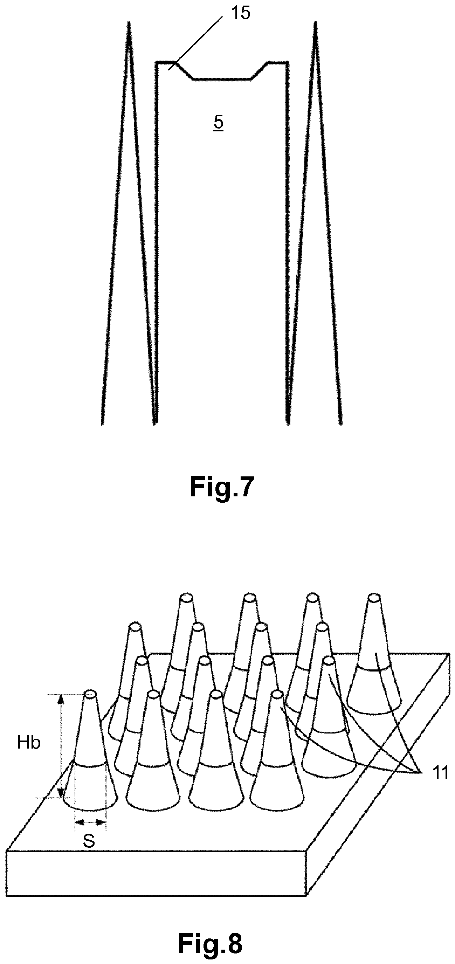

La **figure 1** représente un flanc 3 d'un pneumatique 1. Ce flanc de pneumatique comprend un marquage 5, qui a ici la forme de la lettre O. Le pneumatique comprend en outre une texture 9 entourant le marquage 5. La texture 9 entoure ici tout le marquage 5. En variante, cette texture 9 entoure seulement une partie de ce marquage 5. Cette texture 9 comporte une pluralité de brins 11, tels que représentés à la **figure 8****.** Dans cette figure, les brins 11 ont une forme globalement conique avec une section diminuant dans la hauteur Hb de ces brins. Plus particulièrement, la section moyenne de chaque brin, correspondant à la moyenne des sections S mesurées à intervalles réguliers depuis la base du brin, est comprise entre 0,0007 mm² et 0,06 mm². Dans la texture 9, les brins sont répartis selon une densité au moins égale à cinq brins par millimètre carré.

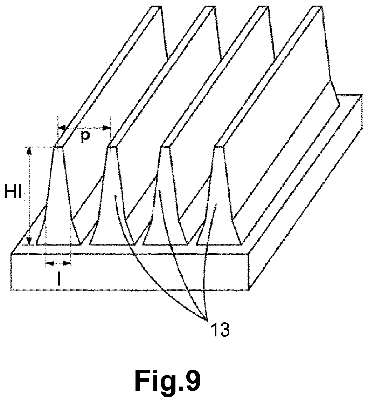

Dans une variante de réalisation, la texture 9 comporte une pluralité de lamelles 13, telles que représentées à la **figure 9****.** Dans cette figure, les lamelles 13 présentent une section globalement triangulaire et la largeur moyenne de chaque lamelle, correspondant à la moyenne des largeurs 1 mesurées à intervalles réguliers dans la hauteur Hl de la lamelle, est comprise entre 0,03 mm et 0,3 mm. Dans la texture 9, les lamelles 13 sont sensiblement parallèles entre elles et le pas P des lamelles est au plus égal à 0,5 mm.

Dans une autre variante de réalisation, la texture 9 comporte une combinaison de brins 11 et de lamelles 13.

On notera, ici, que la texture 9 s'étend à partir du marquage 5 sur une largeur L comprise entre 0,5 mm et 50 mm.

La **figure 2** représente une vue en coupe de la texture entourant le marquage 5 selon un premier mode de réalisation de l'invention. Cette texture peut comporter des brins 11 et/ou des lamelles 13.

Plus particulièrement, les brins 11 de la texture, respectivement les lamelles 13 de la texture s'étendent au même niveau que le marquage 5, c'est-à-dire que les sommets de ces brins 11, respectivement les sommets de ces lamelles 13 sont au niveau 6 de la partie supérieure du marquage 5.

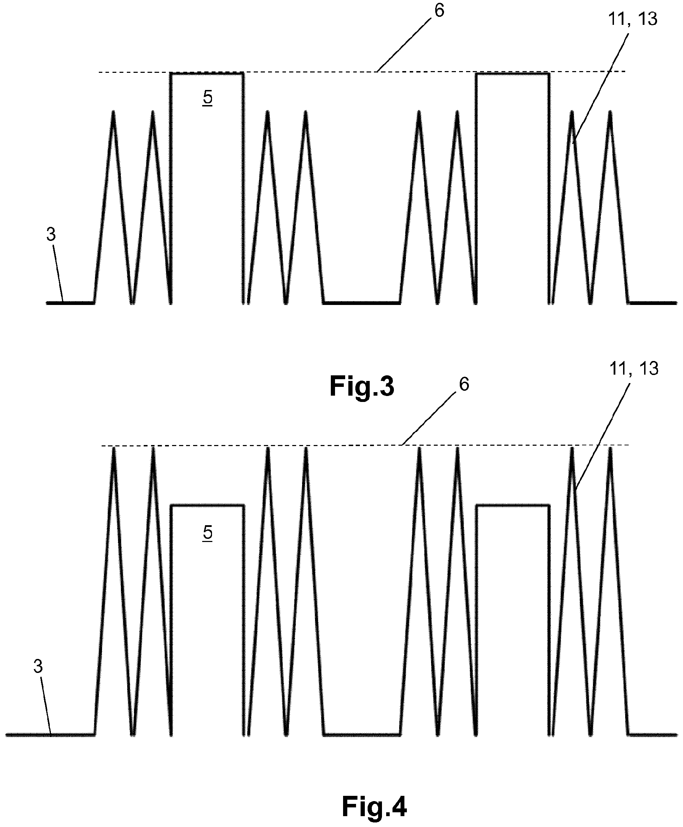

Dans une variante de réalisation visible à la **figure 3****,** les brins 11 de la texture, respectivement les lamelles 13 de la texture s'étendent en hauteur à un niveau inférieur à celui du marquage5, c'est-à-dire que ces brins 11 ou ces lamelles 13 sont en retrait par rapport au niveau 6 du marquage.

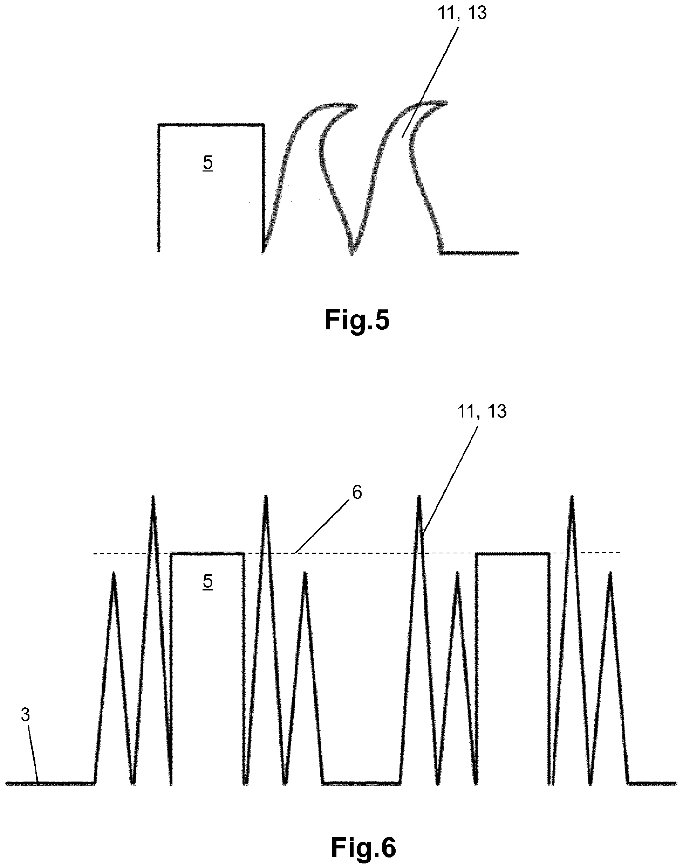

Dans une autre variante de réalisation visible à la **figure 4****,** les brins 11 de la texture, respectivement les lamelles 13 de la texture, dépassent le marquage 5, c'est-à-dire que les sommets de ces brins 11, respectivement les sommets de ces lamelles 13 dépassent le niveau 6 de la partie supérieure du marquage 5. En cas de frottement du flanc du pneumatique au niveau de la texture, les brins 11, respectivement les lamelles 13 fléchissent, comme cela est visible à la **figure 5****,** en absorbant tout ou partie de ces frottements.

Dans une autre variante de réalisation visible à la **figure 6****,** une partie des brins 11 de la texture, respectivement une partie des lamelles 13 de la texture dépassent le marquage 5 et une autre partie de ces brins 11, respectivement de ces lamelles 13 sont en retrait par rapport à ce marquage 5. Préférentiellement, au moins 20 % des brins 11, respectivement des lamelles 13 dépassent le marquage 5.

Dans une variante de réalisation visible à la **figure 7****,** le marquage 5 comprend un bord surélevé 15 par rapport au reste de ce marquage.

L'invention n'est pas limitée aux exemples décrits et représentés et diverses modifications peuvent y être apportées sans sortir de son cadre.

Le flanc du pneumatique peut, par exemple, comporter d'autres marquages ne présentant pas autour d'eux une texture telle que décrite dans l'invention.

En outre pour certains marquage, la texture peut ne les entourer que partiellement.

De plus, on a représenté sur les **figures 2** à **7****,** des marquages présentant un angle de dépouille nul, c'est-à-dire une grande verticalité. En variante, il est possible de réaliser des marquages présentant une pente dont l'angle de dépouille est compris entre 5 et 20°.

Enfin, les lamelles 13 de la **figure 9** peuvent être discontinues. Elles peuvent en outre présenter entre elles des différences de section.

## Revendications

1. Pneumatique en matériau caoutchoutique comprenant un flanc (3) et un marquage (5) faisant protubérance à partir de ce flanc (3), ce pneumatique comportant une texture (9), ladite texture comportant une pluralité de brins (11) faisant protubérance à partir du flanc (3), lesdits brins étant répartis selon une densité au moins égale à cinq brins par millimètre carré (mm²), chaque brin ayant une section moyenne comprise entre 0,0007 mm² et 0,06 mm² et/ou ladite texture comportant une pluralité de lamelles (13) sensiblement parallèles entre elles faisant protubérance à partir du flanc (3), le pas des lamelles étant au plus égal à 0,5 mm, chaque lamelle ayant une largeur moyenne comprise entre 0,03 mm et 0,3 mm, **caractérisé en ce que** la texture (9) fait protubérance à partir du flanc (3) du pneumatique, cette texture (9) entourant tout ou partie du marquage (5) et **en ce que** la texture (9) s'étend à partir du marquage sur une largeur L comprise entre 0,5 mm et 50 mm

2. Pneumatique selon la revendication 1, dans lequel les brins (11) de la texture, respectivement les lamelles (13) de la texture, s'étendent en hauteur au même niveau que le marquage du flanc.

3. Pneumatique selon la revendication 1, dans lequel les brins (11) de la texture, respectivement les lamelles (13) de la texture, s'étendent en hauteur à un niveau inférieur à celui du marquage.

4. Pneumatique selon la revendication 1, dans lequel les brins (11) de la texture, respectivement les lamelles (13) de la texture, dépassent le marquage.

5. Pneumatique selon la revendication 1, dans lequel une partie des brins (11) de la texture, respectivement une partie des lamelles (13) de la texture dépassent le marquage et une autre partie de ces brins, respectivement de ces lamelles sont à un niveau inférieur par rapport à ce marquage.

6. Pneumatique selon l'une quelconque des revendications 1 à 5, dans lequel le marquage comprend un bord surélevé par rapport au reste de ce marquage.

## Patentansprüche

1. Reifen aus Gummimaterial umfassend eine Flanke (3) und eine Markierung (5), die von dieser Flanke (3) hervorsteht, wobei dieser Reifen eine Textur (9) aufweist, wobei die Textur eine Mehrzahl von Stielen (11) aufweist, die von der Flanke (3) hervorsteht, wobei die Stiele gemäß einer Dichte verteilt sind, die mindestens gleich fünf Stiele pro Quadratmillimeter (mm²) ist, wobei jeder Stiel einen durchschnittlichen Querschnitt zwischen 0,0007 mm² und 0,06 mm² aufweist und/oder die Textur eine Mehrzahl von Lamellen (13) aufweist, die im Wesentlichen parallel zueinander verlaufen, die von der Flanke (3) hervorstehen, wobei der Abstand der Lamellen höchstens gleich 0,5 mm ist, wobei jede Lamelle eine durchschnittliche Breite zwischen 0,03 mm und 0,3 mm aufweist, **dadurch gekennzeichnet, dass** die Textur (9) von der Flanke (3) des Reifens hervorsteht, wobei diese Textur (9) die Markierung (5) vollständig oder teilweise umgibt, und dadurch, dass sich die Textur (9) von der Markierung über eine Breite L zwischen 0,5 mm und 50 mm erstreckt.

2. Reifen nach Anspruch 1, wobei sich die Stiele (11) der Textur bzw. die Lamellen (13) der Textur in der Höhe auf dieselbe Ebene wie die Markierung der Flanke erstrecken.

3. Reifen nach Anspruch 1, wobei sich die Stiele (11) der Textur bzw. die Lamellen (13) der Textur in der Höhe auf eine Ebene unter jener der Markierung erstrecken.

4. Reifen nach Anspruch 1, wobei die Stiele (11) der Textur bzw. die Lamellen (13) der Textur über die Markierung hinausstehen.

5. Reifen nach Anspruch 1, wobei ein Teil der Stiele (11) der Textur bzw. ein Teil der Lamellen (13) der Textur über die Markierung hinausstehen und sich ein anderer Teil dieser Stiele bzw. dieser Lamellen auf einer niedrigeren Ebene im Verhältnis zu dieser Markierung befinden.

6. Reifen nach einem der Ansprüche 1 bis 5, wobei die Markierung einen Rand umfasst, der im Verhältnis zum Rest dieser Markierung erhöht ist.

## Claims

1. Tyre made of rubber material comprising a sidewall (3) and a marking (5), this marking (5) protruding from this sidewall (3), this tyre comprising a texture (9), the said texture comprising a plurality of strands (11) protruding from the sidewall (3), the said strands being distributed at a density at least equal to five strands per square millimetre (mm²), each strand having a mean cross section of between 0.0007 mm² and 0.06 mm² and/or the said texture comprising a plurality of substantially mutually parallel lamellae (13) protruding from the sidewall (3), the spacing of the lamellae being at most equal to 0.5 mm, each lamella having a mean width of between 0.03 mm and 0.3 mm, **characterized in that** the texture (9) protrudes from the sidewall (3) of the tyre, this texture (9) surrounding all or part of the marking (5) and **in that** the texture (9) extends from the marking over a width L of between 0.5 mm and 50 mm.

2. Tyre according to Claim 1, in which the strands (11) of the texture or, respectively, the lamellae (13) of the texture, extend at the same height as the marking on the sidewall.

3. Tyre according to Claim 1, in which the strands (11) of the texture or, respectively, the lamellae (13) of the texture, extend at a height lower than that of the marking.

4. Tyre according to Claim 1, in which the strands (11) of the texture or, respectively, the lamellae (13) of the texture, protrude beyond the marking.

5. Tyre according to Claim 1, in which part of the strands (11) of the texture or, respectively, part of the lamellae (13) of the texture, protrude beyond the marking and another part of these strands or, respectively, of these lamellae, are at a lower height than this marking.

6. Tyre according to any one of Claims 1 to 5, in which the marking comprises a raised edge with respect to the rest of this marking.
